# EUROPÄISCHE PATENTSCHRIFT

(11) **EP 1 609 633 B1**
(45) Veröffentlichungstag und Bekanntmachung des Hinweises auf die Patenterteilung: **29.09.2010**
(21) Anmeldenummer: 05013569.8
(22) Anmeldetag: 23.06.2005
(51) Int. Cl.: B60G 17/027, B60G 21/055

(54) **Fahrwerk für Kraftfahrzeuge und Niveauregulierungssystem**
Chassis for motor vehicles and level control system
Chassis pour véhicule à moteur et système de régulation de niveau

(30) Priorität: 24.06.2004 DE 102004030466
(43) Veröffentlichungstag der Anmeldung: 28.12.2005
(73) Patentinhaber: GM Global Technology Operations, Inc., Detroit, MI 48265-3000 (US)
(72) Erfinder: Siebeneick, Jürgen, 55430 Oberwesel (DE)
(74) Vertreter: Daniel, Ulrich W.P.

(56) Entgegenhaltungen:
- DE-A1- 3 323 026
- DE-U1- 20 303 107
- FR-A- 2 740 396
- US-B1- 6 354 607
- PATENT ABSTRACTS OF JAPAN Bd. 010, Nr. 270 (M-517), 13. September 1986 (1986-09-13) & JP 61 094809 A (CHUO SPRING CO LTD), 13. Mai 1986 (1986-05-13)
- PATENT ABSTRACTS OF JAPAN Bd. 1996, Nr. 01, 31. Januar 1996 (1996-01-31) & JP 07 246821 A (KAYABA IND CO LTD), 26. September 1995 (1995-09-26)

## Beschreibung

Die Erfindung betrifft ein Fahrwerk für ein Kraftfahrzeug gemäß den Merkmalen des Oberbegriffs des Anspruchs 1.

Zur Verbesserung des Fahrkomforts wurden in der Vergangenheit Fahrwerke von Kraftfahrzeugen zunehmend weiterentwickelt. So sind aus dem Stand der Technik aktive Fahrwerke bekannt, wobei bei solchen aktiven Fahrwerken zwei oder mehrere Fahrwerksysteme automatisch über einen Regelkreis an die jeweiligen Fahrbedingungen angepasst werden. Bei den mithilfe eines aktiven Fahrwerks anpassbaren Fahrzeugsystemen handelt es sich zum Beispiel um Dämpfungssysteme, Federungssysteme, Niveauregulierungssysteme und/oder Stabilisierungssysteme des Fahrwerks.

Aus dem Stand der Technik gemäß DE 24 43 170 ist ein Fahrwerk eines Kraftfahrzeug mit einer Radaufhängung bekannt, die einen Stabilisator aufweist, der sich zwischen zwei aufzuhängenden Rädern erstreckt. Im Bereich der Räder sind Federn und Dämpfer angeordnet, die mit dem Stabilisator zusammenwirken.

Fahrwerke gemäß dem Oberbegriff des Patentanspruchs 1 sind aus der JP 61 094809 A, JP 07 246821 A und der DE 33 23 026 A1 bekannt. Bei diesen Fahrwerken findet jeweils eine Stelleinrichtung Verwendung, die als Linearzylinder, insbesondere als Hydraulikzylinder oder Pneumatikzylinder, ausgebildet ist, wobei eine linearverstellbare Kolbenstange des Linearzylinders an der Kröpfung des Stabilisators des Fahrwerks angreift. - Eine als Linearzylinder ausgebildete Stelleinrichtung benötigt viel Bauraum, insbesondere aufgrund der Verlängerung der Stelleinrichtung beim Ausfahren der linearverstellbaren Kolbenstange. Abgesehen hiervon lässt sich mittels eines linearverstellbaren Stellteils nur mit hohem Steuerungsaufwand bei den von der Stelleinrichtung zu beherrschenden Kräften ein geringer Stellweg darstellen.

Hiervon ausgehend liegt der vorliegenden Erfindung das Problem zu Grunde, ein neuartiges Fahrwerk für ein Kraftfahrzeug zu schaffen.

Dieses Problem wird durch ein Fahrwerk mit den Merkmalen des Anspruches 1 gelöst.

Vorzugsweise ist die Kröpfung in etwa mittig in den Stabilisator oder in das sich parallel zum Stabilisator erstreckende Element eingebracht. Seitliche Abschnitte des Stabilisators oder des sich parallel zum Stabilisator erstreckenden Elements sind in Drehlagern geführt. Die Stelleinrichtung greift einerseits an der Kröpfung an, andererseits ist die Stelleinrichtung mit einer Karosserie des Kraftfahrzeugs verbunden.

Nach einer vorteilhaften Weiterbildung des Fahrwerks ist die Stelleinrichtung jeder Radaufhängungseinrichtung mit einer Steuer- bzw. Regeleinrichtung verbunden, die als Ausgangsgrößen Stellsignale für die Stelleinrichtungen erzeugt. Die Steuer- bzw. Regeleinrichtung ist mit Sensoren, insbesondere mit Höhensensoren, Geschwindigkeitssensoren und Beschleunigungssensoren verbunden, deren Messwerte Eingangsgrößen für die Steuer- bzw. Regeleinrichtung sind. Bei einem Bremsvorgang sorgt die Steuer- bzw. Regeleinrichtung durch eine entsprechende Ansteuerung der Stelleinrichtungen für einen Nickausgleich am Kraftfahrzeug.

Bevorzugte Weiterbildungen der Erfindung ergeben sich aus den abhängigen Unteransprüchen und der nachfolgenden Beschreibung.

Nachfolgend werden Ausführungsbeispiele der Erfindung, ohne hierauf beschränkt zu sein, unter Bezugnahme auf die Zeichnung näher erläutert. In der Zeichnung zeigt:
- Fig. 1: eine stark schematisierte Darstellung eines erfindungsgemäßen Fahrwerks im Bereich einer Vorderradaufhängungseinrichtung nach einem Ausführungsbeispiel der Erfindung,
- Fig. 2: die Stelleinrichtung der Anordnung gemäß Fig. 1 in Seitenansicht.

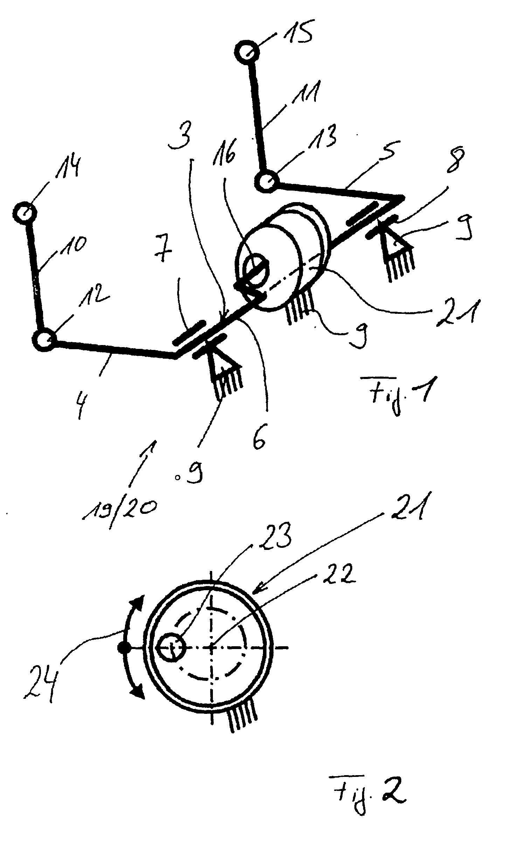

Nachfolgend wird die Erfindung unter Bezugnahme auf Fig. 1 und 2 in größerem Detail beschrieben.

Fig. 1 zeigt einen Ausschnitt aus einem erfindungsgemäßen Fahrwerk 19 im Bereich einer Vorderradaufhängung in stark schematisierter Darstellung. Fig. 1 zeigt demnach eine Radaufhängungseinrichtung 20 für die Vorderräder des Kraftfahrzeugs. Gemäß Fig. 1 umfasst die Radaufhängungseinrichtung 20 einen Stabilisator 3, der sich zwischen zwei nicht-dargestellten, aufzuhängenden Vorderrädern erstreckt. Der Stabilisator 3 verfügt über eine im Wesentlichen U-förmige Gestalt. Der Stabilisator 3 besteht demnach im Wesentlichen aus drei Abschnitten, wobei zwei Schenkel 4 und 5 in etwa parallel zueinander verlaufen und durch einen Abschnitt 6 miteinander verbunden sind. Der Abschnitt 6 des Stabilisators 3, der die parallel verlaufenden Schenkel 4 und 5 miteinander verbindet, ist in Drehlagern 7 und 8 drehbar geführt, wobei die Drehlager 7 und 8 mit einer Karosserie des Kraftfahrzeugs fest verbunden sind. Die Fixierung der Drehlager 7 und 8 an der Karosserie des Kraftfahrzeugs ist in Fig. 1 durch die mit der Bezugsziffer 9 gekennzeichneten Symbole dargestellt. Die Schenkel 4 und 5 des Stabilisators 3 greifen mit einem Ende am Abschnitt 6 an und mit gegenüberliegenden Enden an jeweils einer Stange 10 bzw. 11. Die Verbindung zwischen den Schenkeln 4 und 5 des Stabilisators 3 und den Stangen 10 und 11 ist gelenkig ausgeführt, was in Fig. 1 durch Gelenke 12, 13 verdeutlicht ist. Mit gegenüberliegenden Enden greifen die Stangen 10, 11 ebenfalls über Gelenke 14 und 15 an nicht-dargestellten Federelementen des Fahrwerks bzw. der Radaufhängungseinrichtung 20 an.

Der Stabilisator 3, nämlich der Abschnitt 6 des Stabilisators 3, weist eine Kröpfung 16 auf. An dieser Kröpfung 16 greift eine Stelleinrichtung 21 bzw. ein Aktuator an, wobei die Stelleinrichtung 21 weiterhin im Sinne des Symbols 9 an der Karosserie des Kraftfahrzeugs befestigt ist. Mithilfe der Stelleinrichtung 21 ist der Stabilisator 3 bzw. der Abschnitt 6 des Stabilisators 3 verdrehbar. Durch diese Verdrehung des Stabilisators 3 ist eine Niveauänderung des Kraftfahrzeugs realisierbar.

Die Stelleinrichtung 21 ist als Drehzylinder ausgebildet. Der Drehzylinder kann als hydraulisch, pneumatisch oder elektrischer betriebener Drehzylinder ausgebildet sein. Die Auswahl einer geeigneten Stelleinrichtung 21 obliegt dem hier angesprochenen Fachmann.

Mithilfe der Stelleinrichtung 21 kann der Stabilisator 3 entweder kontinuierlich oder diskontinuierlich verdreht werden. Unter einem kontinuierlichen Verdrehen ist ein stufenloses Verdrehen und unter einem diskontinuierlichen Verdrehen ist ein abgestuftes Verdrehen des Stabilisators 3 zu verstehen. Bei einem diskontinuierlichen bzw. stufenweisen Verdrehen des Stabilisators 3 wird demnach eine stufenweise Niveauänderung des Kraftfahrzeugs in mehreren Positionen erreicht. Je nach Drehrichtung des Stabilisators 3 ergibt sich ein Absenken oder Anheben des Kraftfahrzeugs. Bei einem kontinuierlichen Verdrehen des Stabilisators 3 ist eine stufenlose Höhenänderung bzw. Niveauänderung für das Kraftfahrzeug realisierbar.

Die Stelleinrichtung 21 verfügt über eine Drehachse 22. Eine Öffnung 23 durchdringt die Stelleinrichtung 21 und verläuft parallel zur Drehachse 22, jedoch axial versetzt zu derselben. Durch diese Öffnung 23 ist die Kröpfung 16 des Stabilisators 3 geführt. Mithilfe der Stelleinrichtung 21, die demnach an der Kröpfung 16 angreift, ist der Stabilisator 3 entweder diskontinuierlich in Stufen oder kontinuierlich verdrehbar. Eine in Fig. 3 durch den Doppelpfeil 24 angedeutete Drehrichtung für die Stelleinrichtung 21 bestimmt, ob das Fahrzeug angehoben oder abgesenkt wird.

Bei dem Ausführungsbeispiel weist der Stabilisator 3 selbst die Kröpfung 16 auf. Diese Ausführung der Erfindung ist bevorzugt. Es ist jedoch auch vorstellbar, dass zusätzlich zum Stabilisator 3 ein sich parallel zum Stabilisator bzw. zum Abschnitt 6 des Stabilisators 3 erstreckendes Element mit Drehfedereigenschaften, ein sogenannter Drehfederstab, vorgesehen ist. In diesem Fall ist die Kröpfung nicht in den Stabilisator, sondern in den Drehfederstab eingebracht. Die Stelleinrichtung 21 greift dann in diesem Fall an der Kröpfung des Drehfederstabs an.

Es liegt im Sinne der hier vorliegenden Erfindung, dass sowohl die Radaufhängungseinrichtung der Vorderräder als auch eine Radaufhängungseinrichtung für die Hinterräder des Kraftfahrzeugs im obigen Sinne ausgebildet sein kann. In diesem Fall umfasst das erfindungsgemäße Fahrwerk zwei Radaufhängungseinrichtungen mit einem Stabilisator oder einem Drehfederstab, wobei der Stabilisator oder der Drehfederstab beider Radaufhängungseinrichtungen jeweils eine Kröpfung aufweisen, an welchen jeweils eine Stelleinrichtung angreifen.

An dieser Stelle sei darauf hingewiesen, dass die Stelleinrichtung 21 einen zusätzlichen Lastpfad für das erfindungsgemäße Fahrwerk bilden. Der eigentliche Lastpfad zur Aufnahme der Kraftfahrzeuglast wird durch die nicht-dargestellten, mit den Stangen 10, 11 gelenkig verbundenen Federelemente gebildet. Der zweite Lastpfad wird durch die Stelleinrichtung 21 bereitgestellt, die einen Teil der Last des Kraftfahrzeugs aufnimmt.

Im Sinne der Erfindung wird weiterhin ein Niveauregulierungssystem vorgeschlagen, das auf dem oben geschilderten Fahrwerk 19 oder der oben dargestellten Radaufhängungseinrichtung 20 basiert. Bei einem derartigen Niveauregulierungssystem, bei welcher sowohl die Aufhängung der Vorderräder als auch die Aufhängung der Hinterräder über derartige Radaufhängungseinrichtungen 20 erfolgt, sind die Stelleinrichtungen 21 mit einer nicht-dargestellten Steuer- bzw. Regeleinrichtung verbunden. Weiterhin sind mit dieser Steuer- bzw. Regeleinrichtung Sensoren, nämlich Höhensensoren und/oder Geschwindigkeitssensoren und gegebenenfalls weitere Sensoren verbunden. Diese Sensoren stellen der Steuer- bzw. Regeleinrichtung als Eingangsgrößen Messwerte bereit. Abhängig von diesen Messwerten und einem in der Steuer- bzw. Regeleinrichtung implementierten Regelgesetz werden Ausgangsgrößen generiert, die den Stelleinrichtungen 21 als Eingangsgrößen bzw. Stellsignale zugeführt werden. Abhängig von diesen Stellsignalen verdrehen die Stelleinrichtungen 21 die Stabilisatoren 3 und sorgen so für eine Niveauregulierung. Insbesondere ist mit einem derartigen Niveauregulierungssystems ein aktiver Nickausgleich für das Kraftfahrzeug realisierbar. Wird zum Beispiel von den Höhensensoren und einem Beschleunigungssensor ein ruckartiger Bremsvorgang des Kraftfahrzeugs detektiert, so liegt es im Sinne der hier vorliegenden Erfindung, dass zur Gewährleistung eines Bremsnickausgleichs eine entsprechende Ansteuerung der Stelleinrichtungen erfolgt. Hierdurch sind die Bremseigenschaften des Kraftfahrzeugs positiv beeinflussbar.

Das erfindungsgemäße Fahrwerk zeichnet sich durch einen einfachen und damit kostengünstigen Aufbau aus. Es ist auf einfache Art und Weise in ein Kraftfahrzeug integrierbar. Die Niveauänderung des Kraftfahrzeugs kann entweder stufenlos oder abgestuft erfolgen. Abhängig von Geschwindigkeitswerten, Beschleunigungswerten oder Verzögerungswerten des Kraftfahrzeugs kann zur Verringerung des Kraftstoffverbrauchs und/oder zur Erhöhung der Fahrsicherheit eine Niveauänderung des Kraftfahrzeugs durchgeführt werden.

### Bezugszeichenliste

- Stabilisator: 3
- Schenkel: 4
- Schenkel: 5
- Abschnitt: 6
- Drehlager: 7
- Drehlager: 8
- Symbol: 9
- Stange: 10
- Stange: 11
- Gelenk: 12
- Gelenk: 13
- Gelenk: 14
- Gelenk: 15
- Kröpfung: 16
- Fahrwerk: 19
- Radaufhängungseinrichtung: 20
- Stelleinrichtung: 21
- Drehachse: 22
- Öffnung: 23
- Doppelpfeil: 24

## Patentansprüche

1. Fahrwerk für ein Kraftfahrzeug, mit mindestens einer Radaufhängungseinrichtung (20), wobei die oder jede Radaufhängungseinrichtung (20) einen sich zwischen zwei aufzuhängenden Rädern erstreckenden Stabilisator (3) aufweist, wobei der Stabilisator (3) oder ein sich parallel zum Stabilisator erstreckendes Element mit Drehfedereigenschaften mindestens eine Kröpfung (16) aufweist, wobei an der oder jeder Kröpfung (16) mindestens eine Stelleinrichtung (21) angreift, die den Stabilisator oder das sich parallel zum Stabilisator erstreckende Element zur Gewährleistung einer Niveauänderung des Kraftfahrzeugs verdreht, **dadurch gekennzeichnet, dass** die Stelleinrichtung (21) als Drehzylinder ausgebildet ist, wobei die Kröpfung (16) in einer zur Drehachse (22) des Drehzylinder versetzt angeordneten Öffnung (23) geführt ist.

2. Fahrwerk nach Anspruch 1, **dadurch gekennzeichnet, dass** die Kröpfung (16) in etwa mittig in den Stabilisator (3) oder das sich parallel zum Stabilisator erstreckende Element eingebracht ist.

3. Fahrwerk nach Anspruch 1 oder 2, **dadurch gekennzeichnet, dass** der Stabilisator (3) oder das sich parallel zum Stabilisator erstreckende Element in Drehlagern (7, 8) geführt ist.

4. Fahrwerk nach einem oder mehreren der Ansprüche 1 bis 3, **dadurch gekennzeichnet, dass** Schenkel (4, 5) des Stabilisators (3) über Stangen (10, 11) gelenkig mit Federungseinrichtungen verbunden sind, wobei die Federungseinrichtungen den aufzuhängenden Rädern zugeordnet sind.

5. Fahrwerk nach einem oder mehreren der Ansprüche 1 bis 4, **dadurch gekennzeichnet, dass** die Stelleinrichtung (21) einerseits an der Kröpfung (16) angreift und andererseits mit einer Karosserie des Kraftfahrzeugs verbunden ist.

6. Fahrwerk nach einem oder mehreren der Ansprüche 1 bis 5, **dadurch gekennzeichnet, dass** die Stelleinrichtung (21) den Stabilisator (3) oder das sich parallel zum Stabilisator erstreckende Element kontinuierlich verdreht.

7. Fahrwerk nach einem oder mehreren der Ansprüche 1 bis 5, **dadurch gekennzeichnet, dass** die Stelleinrichtung (21) den Stabilisator (3) oder das sich parallel zum Stabilisator erstreckende Element diskontinuierlich, nämlich stufenweise, verdreht.

8. Fahrwerk nach einem oder mehreren der Ansprüche 1 bis 7, **dadurch gekennzeichnet, dass** sowohl für die Vorderradaufhängung als auch für die Hinterradaufhängung jeweils eine derartige Radaufhängungseinrichtung (20) vorhanden ist.

9. Fahrwerk nach einem oder mehreren der Ansprüche 1 bis 8, **dadurch gekennzeichnet, dass** die oder jede Stelleinrichtung (21) mit einer Steuer- bzw. Regeleinrichtung verbunden ist, die als Ausgangsgrößen Stellsignale für die oder jede Stelleinrichtung erzeugt.

10. Fahrwerk nach Anspruch 9, **dadurch gekennzeichnet, dass** die Steuer- bzw. Regeleinrichtung mit Sensoren, insbesondere mit mindestens einem Höhensensor und/oder einem Geschwindigkeitssensor und/oder einem Beschleunigungssensor, verbunden ist, deren Messwerte Eingangsgrößen für die Steuer- bzw. Regeleinrichtung sind.

11. Fahrwerk nach Anspruch 9 oder 10, **dadurch gekennzeichnet, dass** die Steuer- bzw. Regeleinrichtung beim einem Bremsvorgang durch eine entsprechende Ansteuerung der oder jeder Stelleinrichtung für einen Nickausgleich des Kraftfahrzeugs sorgt.

## Claims

1. A chassis for a motor vehicle, comprising at least one wheel suspension device (20), with the or each wheel suspension device (20) having a stabilizer (3) extending between two wheels to be suspended, with the stabilizer (3) or an element with torsion spring properties extending parallel to the stabilizer having at least one offset (16), with at least one actuating device (21) which acts upon the or each offset (16) and twists the stabilizer or the element extending parallel to the stabilizer for the purpose of ensuring a change in level of the motor vehicle, **characterized in that** the actuating device (21) is arranged as a rotary cylinder, with the offset (16) being guided in an opening (23) arranged in an offset manner in relation to the rotational axis (22) of the rotary cylinder.

2. A chassis according to claim 1, **characterized in that** the offset (16) is introduced approximately centrally in the stabilizer (3) or the element extending parallel to the stabilizer.

3. A chassis according to claim 1 or 2, **characterized in that** the stabilizer (3) or the element extending parallel to the stabilizer are guided in swivels.

4. A chassis according to one or several of the claims 1 to 3, **characterized in that** the legs (4, 5) of the stabilizer (3) are connected via rods (10, 11) in an articulated manner with the suspension devices, with the suspension devices being associated with the wheels to be suspended.

5. A chassis according to one or several of the claims 1 to 4, **characterized in that** the actuating device (21) acts upon the offset (16) on the one hand and is connected with the body of the motor vehicle on the other hand.

6. A chassis according to one or several of the claims 1 to 5, **characterized in that** the actuating device (21) continuously twists the stabilizer (3) or the element extending parallel to the stabilizer.

7. A chassis according to one or several of the claims 1 to 5, **characterized in that** the actuating device (31) twists the stabilizer (3) or the element extending parallel to the stabilizer in a discontinuous manner, namely in a stepwise manner.

8. A chassis according to one or several of the claims 1 to 7, **characterized in that** one wheel suspension device (20) each is present for the front suspension and for the rear suspension.

9. A chassis according to one or several of the claims 1 to 8, **characterized in that** the or each actuating device (21) is connected with a control or feedback control device which generates control input as output parameters for the or each actuating device.

10. A chassis according to claim 9, **characterized in that** the control or feedback control device is connected with sensors, especially with at least one height sensor and/or a speed sensor and/or an acceleration sensor, the measured values of which are input quantities for the control or feedback control device.

11. A chassis according to claim 9 or 10, **characterized in that** the control or feedback control device ensures a pitching compensation of the motor vehicle during a braking process by a respective control of the or each actuating device.

## Revendications

1. Châssis pour un véhicule à moteur, avec au moins un dispositif de suspension des roues (20), dans lequel le ou chaque dispositif de suspension des roues (20) présente un stabilisateur (3) s'étendant entre deux roues à suspendre, dans lequel le stabilisateur (3) ou un élément ayant des propriétés d'élasticité en torsion qui s'étend parallèlement au stabilisateur présente au moins un coude (16), dans lequel au moins un dispositif d'ajustement (21) se met en prise sur le ou chaque coude (16) et fait tourner le stabilisateur ou l'élément qui s'étend parallèlement au stabilisateur pour garantir un changement de niveau du véhicule à moteur, **caractérisé en ce que** le dispositif d'ajustement (21) est conçu comme un cylindre pivotant, le coude (16) étant guidé dans une ouverture (23) décalée par rapport à l'axe de rotation (22) du cylindre pivotant.

2. Châssis selon la revendication 1, **caractérisé en ce que** le coude (16) est disposé approximativement au milieu dans le stabilisateur (3) ou l'élément qui s'étend parallèlement au stabilisateur.

3. Châssis selon la revendication 1 ou 2, **caractérisé en ce que** le stabilisateur (3) ou l'élément qui s'étend parallèlement au stabilisateur est guidé dans des coussinets de pivotement (7, 8).

4. Châssis selon une ou plusieurs des revendications 1 à 3, **caractérisé en ce que** des bras (4, 5) du stabilisateur (3) sont reliés de façon articulée par des tringles (10, 11) à des dispositifs d'amortissement, lesquels dispositifs d'amortissement sont associés aux roues à suspendre.

5. Châssis selon une ou plusieurs des revendications 1 à 4, **caractérisé en ce que** le dispositif d'ajustement (21) se met en prise, d'une part, sur le coude (16) et est relié, d'autre part, à une carrosserie du véhicule à moteur.

6. Châssis selon une ou plusieurs des revendications 1 à 5, **caractérisé en ce que** le dispositif d'ajustement (21) fait tourner le stabilisateur (3) ou l'élément qui s'étend parallèlement au stabilisateur de façon continue.

7. Châssis selon une ou plusieurs des revendications 1 à 5, **caractérisé en ce que** le dispositif d'ajustement (21) fait tourner le stabilisateur (3) ou l'élément qui s'étend parallèlement au stabilisateur de façon discontinue, à savoir par paliers.

8. Châssis selon une ou plusieurs des revendications 1 à 7, **caractérisé en ce qu'**un tel dispositif de suspension des roues (20) est prévu aussi bien pour la suspension des roues avant que pour la suspension des roues arrière.

9. Châssis selon une ou plusieurs des revendications 1 à 8, **caractérisé en ce que** le ou chaque dispositif d'ajustement (21) est relié à un dispositif de commande ou de régulation qui produit comme grandeurs de sortie des signaux d'ajustement pour le ou chaque dispositif d'ajustement.

10. Châssis selon la revendication 9, **caractérisé en ce que** le dispositif de commande ou de réglage est relié à des capteurs, en particulier avec au moins un capteur de hauteur et/ou un capteur de vitesse et/ou un capteur d'accélération, dont les grandeurs de mesure sont des grandeurs d'entrée pour le dispositif de commande ou de régulation.

11. Châssis selon la revendication 9 ou 10, **caractérisé en ce que** le dispositif de commande ou de régulation assure une compensation du tangage du véhicule lors d'une opération de freinage grâce à l'activation correspondante du ou de chaque dispositif d'ajustement.
